# EUROPÄISCHE PATENTSCHRIFT

(11) **EP 1 290 409 B1**
(45) Veröffentlichungstag und Bekanntmachung des Hinweises auf die Patenterteilung: **22.07.2009**
(21) Anmeldenummer: 01943104.8
(22) Anmeldetag: 18.05.2001
(51) Int. Cl.: G01C 21/36, G06F 17/30, G08G 1/0969

(54) **VORRICHTUNG ZUM EINGEBEN VON NAMEN IN EIN NAVIGATIONSSYSTEM SOWIE NAVIGATIONSSYSTEM FÜR KRAFTFAHRZEUGE**
DEVICE FOR INPUTTING NAMES INTO A NAVIGATION SYSTEM AND A CORRESPONDING NAVIGATION SYSTEM FOR MOTOR VEHICLES
DISPOSITIF SERVANT A ENTRER DES NOMS DANS UN SYSTEME DE NAVIGATION, AINSI QUE SYSTEME DE NAVIGATION POUR VEHICULES AUTOMOBILES

(30) Priorität: 20.05.2000 DE 10025042
(43) Veröffentlichungstag der Anmeldung: 12.03.2003
(73) Patentinhaber: ROBERT BOSCH GMBH, 70442 Stuttgart (DE)
(72) Erfinder: EHRKE, Jens, 25569 Bahrenfleth (DE)
(86) Internationale Anmeldenummer: PCT/DE2001/001875
(87) Internationale Veröffentlichungsnummer: WO 2001/090696

(56) Entgegenhaltungen:
- EP-A- 0 827 124
- EP-A- 0 905 662

## Beschreibung

### STAND DER TECHNIK

Die Erfindung betrifft eine Vorrichtung zum Eingeben von Namen in ein Navigationssystem. Die Vorrichtung enthält eine Speichereinheit zum Speichern von Namen mindestens einer Kategorie von Ortsangaben, z.B. von Ländernamen, Städtenamen oder Straßennamen. Weiterhin enthält die Vorrichtung eine Eingabeeinheit zum Auswählen eines Namens, beispielsweise mit Hilfe einer kleinen Anzahl von Tasten, Wippschaltern oder Drehgebern. Eine Anzeigeeinheit dient zur Unterstützung der Eingabe. Als Anzeigeeinheit wird beispielsweise ein LC-Display (liquid cristal) eingesetzt. Die Vorrichtung zum Eingeben enthält außerdem eine Steuereinheit, vorzugsweise mit einem Prozessor. Die Steuereinheit veranlasst abhängig von einem vorgegebenen Sortierkriterium für die Namen einer Kategorie und abhängig von früheren Eingaben auf der Anzeigeeinheit die Darstellung eines auswählbaren Namens als Vorschlag.

Bei dem bekannten Kraftfahrzeug-Navigationssystem Travel-Pilot RNS 149 der Firma Blaupunkt wird als Sortierkriterium die alphabetische Reihenfolge gewählt. Die Abmessungen des Navigationssystems sind mit den Abmessungen eines herkömmlichen Autoradios vergleichbar. Aufgrund der kleinen Geräteabmessungen und des beschränkten Raumes im Kraftfahrzeug wird üblicherweise zur Eingabe von Daten in das Navigationssystem keine Tastatur eingesetzt, wie sie bei Schreibmaschinen oder Personalcomputern gebräuchlich ist. Die Eingabe von Buchstaben und Ziffern erfolgt im Vergleich zu einer Tastatur mit wesentlich weniger Eingabeelementen, z. B. mit weniger als zehn Tasten, und ist deshalb umständlicher. Durch das Anzeigen eines Namens als Vorschlag ist es möglich, den Eingabevorgang abzukürzen, falls der Vorschlag durch eine Bedienperson bestätigt wird. Als Vorauswahl wird mindestens ein Name angezeigt, dessen Anfangsbuchstabenfolge mit den bisher eingegebenen Buchstaben übereinstimmt.

Aus der EP 0 905 662 A1 ist ein Eingabesystem für Orts- oder Straßennamen über eine Spracheingabe bekannt. Für eine schnellere Spracheingabe weist die Eingabevorrichtung eine erste Ortsnamensliste mit allen Ortsnamen und eine zweite Ortsnamensliste auf, die eine Teilmenge der ersten Ortsnamensliste mit größeren Orten ist.
Aus der EP 0 827 124 A2 ist ein Fahrzeugnavigationssystem bekannt, bei dem über einen Touchscreen ein Fahrziel ausgesucht werden kann. Einem Benutzer werden insbesondere die von ihm zuletzt angefahrenen Orte zur unmittelbaren Auswahl über den Touchscreen angezeigt.
Es ist Aufgabe der Erfindung zum Eingeben von Namen in ein Navigationssystem eine einfach aufgebaute Vorrichtung anzugeben, mit deren Hilfe der Eingabevorgang weiter erleichtert wird. Außerdem soll ein diese Vorrichtung enthaltendes Navigationssystem angegeben werden.

### VORTEILE DER ERFINDUNG

Die Erfindung geht von der Überlegung aus, dass es Namen gibt, die häufig ausgewählte Ziele bezeichnen, und dass es andererseits Namen gibt, die nur selten ausgewählte Ziele betreffen. Die Wahrscheinlichkeit, mit der zum Beispiel ein bestimmter Ortsname ausgewählt wird, d.h. die Auswahlwahrscheinlichkeit, steht oft im Zusammenhang mit leicht zu erfassenden Daten, die den durch den Ortsnamen bezeichneten Ort betreffen.

Bei der erfindungsgemäßen Vorrichtung dient in der Steuereinheit die Auswahlwahrscheinlichkeit der Namen als Sortierkriterium. Als Maß für die Auswahlwahrscheinlichkeit wird mindestens eine statistisch erhobene oder messtechnisch erfasste Angabe über die örtlichen Gegebenheiten des mit dem Namen bezeichneten Gebietes herangezogen. Durch diese Maßnahmen wird erreicht, dass die durch die Steuereinheit veranlassten Vorschläge häufiger als bisher durch die Bedienperson angenommen werden. Die Anzahl der bis zur Annahme eines Vorschlags einzugebenden Zeichen eines Namens verringert sich dadurch. Die Eingabevorrichtung wird mit anderen Worten leichter bedienbar.

Bei einer Weiterbildung der erfindungsgemäßen Vorrichtung wird als Maß für die Auswahlwahrscheinlichkeit eines Ländernamens die Einwohnerzahl des durch den Ländernamen bezeichneten Landes herangezogen. Alternativ oder zusätzlich wird als Maß für die Auswahlwahrscheinlichkeit eines Städtenamens die Einwohnerzahl der durch den Städtenamen bezeichneten Stadt herangezogen. Bei einer nächsten Weiterbildung wird als Maß für die Auswahlwahrscheinlichkeit eines Straßennamens die Anwohnerzahl der durch den Straßennamen bezeichneten Straße herangezogen. Die Einwohner- bzw. Anwohnerzahl ist eine leicht verfügbare statistische Angabe, die jährlich aktualisiert wird und beispielsweise einem statistischen Jahrbuch entnehmbar ist.

Bei einer nächsten Weiterbildung wird als Maß für die Auswahlwahrscheinlichkeit eines Straßennamens zusätzlich oder alternativ zu der Zahl der Anwohner die Straßenlänge und/oder die Anzahl der Hausnummern der durch den Straßennamen bezeichneten Straße herangezogen. Die Straßenlänge lässt sich beispielsweise von Stadtplänen leicht ablesen. Auf einigen Stadtplänen sind auch Hausnummern verzeichnet.

Beim Festlegen der Sortierreihenfolge unter Berücksichtigung mehrerer Kriterien werden die einzelnen Kriterien mit geeigneten Wichtungsfaktoren gewichtet. Weitere Kriterien zum Festlegen der Sortierreihenfolge sind beispielsweise die Anzahl und/oder Größe von Hotels, die Anzahl von Büros, Bahnhöfen oder Flughäfen in der Nähe und/oder innerhalb des durch den Namen bezeichneten Gebietes. Die genannten Angaben lassen sich ebenfalls mit vergleichsweise geringem Aufwand ermitteln.

Der Nutzen der Erfindung ist besonders groß, wenn die Eingabeeinheit nur sehr wenige Eingabeelemente enthält, zum Beispiel weniger als zehn Tasten. Dies ist beispielsweise dann der Fall, wenn zur Eingabe eines einem Eingabeelement zugeordneten Zeichens das Eingabeelement mehrfach hintereinander ohne zwischenzeitliche und/oder ohne gleichzeitige Betätigung anderer Eingabeelemente betätigt werden muss. Eine solche Mehrfachbelegung von Eingabeelementen ist beispielsweise auch bei Mobilfunktelefonen zur Eingabe von Text gebräuchlich. Jedes Zeichen, das nicht über das Eingabeelement eingegeben werden muss, spart der Bedienperson mehrere Sekunden bei der Eingabe.

Bei einer erfindungsgemäßen Eingabeeinheit mit einem Eingabeelement, das zum Auswählen eines einzugebenden Zeichens dient, und mit einem anderen Eingabeelement zum Bestätigen der Auswahl ergibt sich eine Zeiteinsparung bei der Eingabe von Zeichen. Verwendet werden beispielsweise Pfeiltasten, mit denen die Buchstaben des Alphabets nacheinander auswählbar sind.

Bei einer Weiterbildung der erfindungsgemäßen Vorrichtung ist das Sortierkriterium nicht fest vorgegeben, sondern wählbar. Beispielsweise wählt die Bedienperson zwischen einer alphabetischen Sortierung und einer Sortierung nach Auswahlwahrscheinlichkeiten aus. Die alphabetische Sortierung eignet sich besonders zur Auswahl innerhalb einer Auswahlliste von mehreren auf der Anzeigeeinheit angezeigten Namen. Die Sortierung nach Auswahlwahrscheinlichkeit wird dagegen von Bedienpersonen dann als angenehm empfunden, wenn beispielsweise jeweils nur ein Vorschlag auf der Anzeigeeinheit angezeigt wird.

Ein zweiter Aspekt der Erfindung betrifft ein Navigationssystem, insbesondere für ein Kraftfahrzeug, das die erfindungsgemäße Vorrichtung zum Eingeben von Namen oder eine der Weiterbildungen dieser Vorrichtung enthält.

### ZEICHNUNGEN

Im Folgenden werden Ausführungsbeispiele der Erfindung an Hand der beiliegenden Zeichnungen erläutert. Darin zeigen:
- Figur 1: das Bedienfeld eines Navigationssystems und
- Figur 2: Verfahrensschritte zum Eingeben des Ziels in das Navigationssystem.

### BESCHREIBUNG DER AUSFÜHRUNGSBEISPIELE

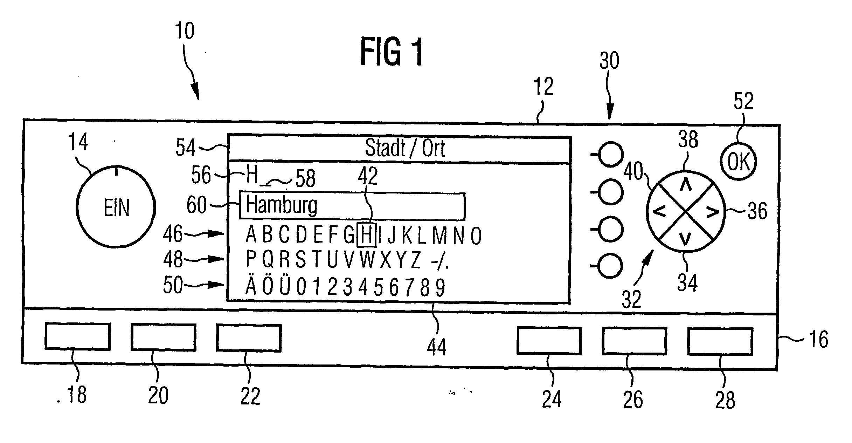

Figur 1 zeigt ein Bedienfeld 10 eines Navigationssystems 12 für ein Kraftfahrzeug. Das Navigationssystem 12 leitet die das Kraftfahrzeug führende Person mit Hilfe von Sprachangaben zu einem zuvor eingegebenen Ziel. Die Position des Kraftfahrzeuges wird beispielsweise mit Hilfe eines Satelliten während der Bewegung des Kraftfahrzeuges auf das Ziel hin aktualisiert. Das Bedienfeld 10 enthält im linken Teil einen Betriebsschalter 14, mit dessen Hilfe das Navigationssystem 12 ein- und ausgeschaltet werden kann. Der Betriebsschalter 14 ist mit einem Drehknopf gekoppelt, mit dessen Hilfe die Lautstärke der Ansagen des Navigationssystems 12 eingestellt werden kann. Eine Tastenleiste 16 im unteren Teil des Bedienfeldes 10 enthält Tasten 18 bis 28 zur Bedienung des Navigationssystems 12. Die Funktion der Tasten 18 bis 28 betrifft nicht die Eingabe von Zielen, so dass diese Funktionen im Folgenden nicht erläutert werden.

Leuchtdioden 30 sind übereinander im rechten Teil des Bedienfeldes 10 angeordnet und dienen der Anzeige bestimmter Betriebszustände des Navigationssystems 12. Das Bedienfeld 10 enthält im rechten Teil auch ein Eingabefeld 32, das vier die Viertel eines Vollkreises bildende Eingabetasten 34 bis 40 enthält. Die Eingabetasten 34 bis 40 dienen zur Bewegung eines Eingaberahmens 42 in einem LC-Display 44 (liquid cristal). Die Eingabetasten 34 bis 40 bewegen den Eingaberahmen in dieser Reihenfolge eine Zeile nach unten, ein Zeichen nach rechts, eine Zeile nach oben bzw. ein Zeichen nach links.

Die mit Hilfe der Eingabetasten 34 bis 40 auswählbaren Zeichen sind in drei Zeilen 46 bis 50 des LC-Displays 44 dargestellt. Auswählbar sind die Großbuchstaben A bis Z, Sonderzeichen, wie zum Beispiel Umlaute, und die Ziffern 0 bis 9. Die Eingabe eines ausgewählten Zeichens erfolgt durch kurzes Drücken einer Bestätigungstaste 52, die oberhalb des Eingabefeldes 32 angeordnet ist.

In einer Titelzeile 54 des LC-Displays 44 wird angegeben, welcher Name derzeit einzugeben ist. Bei dem in Fig. 1 dargestellten Betriebszustand ist der Name der Zielstadt bzw. eines kleineren Zielortes einzugeben.

Unterhalb der Titelzeile 54 befindet sich im LC-Display 44 eine Eingabezeile 56, in der die bereits eingegebenen Buchstaben eines Namens dargestellt werden. Im Ausführungsbeispiel ist bereits der Buchstabe "H" eingegeben worden. Eine durch einen Unterstrich dargestellte Eingabemarke 58 markiert die aktuelle Eingabeposition.

Unterhalb der Eingabezeile 56 ist eine Vorschlagszeile 60 angeordnet, in welcher durch die Steuereinheit des Navigationssystems 12 abhängig von bereits eingegebenen Buchstaben eines Namens und abhängig von Auswahlwahrscheinlichkeiten die Darstellung eines Vorschlags für die Zielstadt bzw. den Zielort veranlasst wird. Im Ausführungsbeispiel wird nach der Eingabe des Buchstaben H die Stadt Hamburg vorgeschlagen, weil Hamburg die einwohnerreichste deutsche Stadt ist, die mit dem Buchstaben "H" beginnt. Der in der Vorschlagzeile 60 angegebene Vorschlag kann angenommen werden, indem die Bestätigungstaste 52 zweimal kurz hintereinander gedrückt wird.

Die bereits erwähnten Zeilen 46 bis 50 werden im unteren Teil des LC-Displays 44 dargestellt.

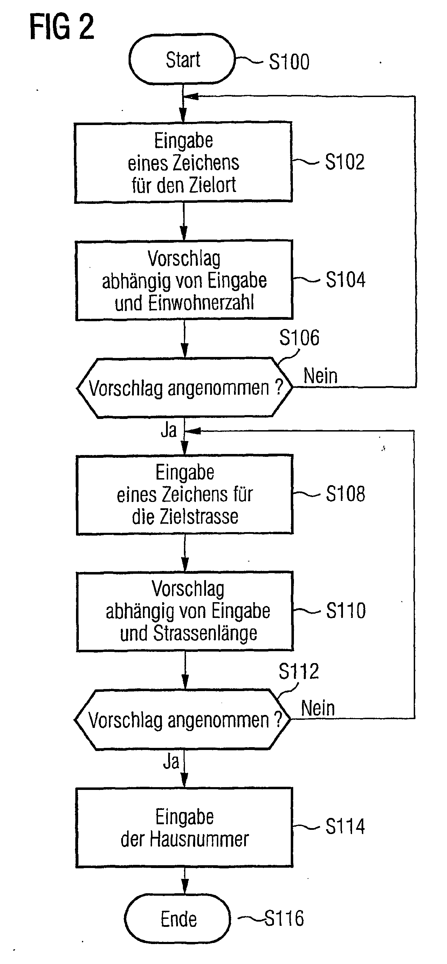

Figur 2 zeigt Verfahrensschritte, die beim Eingeben des Ziels in das Navigationssystem 12 durchgeführt werden. Beim Erläutern der Figur 2 wird auch auf Figur 1 Bezug genommen. Das Verfahren beginnt in einem Verfahrensschritt S100 vor Antritt der Fahrt.

In einem Verfahrensschritt S102 wird das erste Zeichen des Namens für den Zielort eingegeben und auf dem LC-Display 44 dargestellt. In einem folgenden Verfahrensschritt S104 veranlasst die Steuereinheit des Navigationssystems 12 die Darstellung eines Vorschlages in der Vorschlagszeile 60 abhängig von den bisher eingegebenen Zeichen des Namens und abhängig von der Einwohnerzahl der Zielorte, die mit dem bereits eingegebenen Zeichen beginnen. Es wird aus einer Vorauswahl der mit der bisher eingegebenen Buchstabenfolge beginnenden Namen der Name derjenigen Stadt ausgewählt, welche die meisten Einwohner hat.

In einem Verfahrensschritt S106 wird geprüft, ob der Vorschlag durch zweimaliges unmittelbar aufeinanderfolgendes Drücken der Bestätigungstaste 52 angenommen worden ist. Wird die Bestätigungstaste 52 nur einmal gedrückt, so wird das aktuell durch den Eingaberahmen 42 umrahmte Zeichen eingegeben und das Verfahren im Verfahrensschritt S102 fortgesetzt. Somit befindet sich das Verfahren in einer Eingabeschleife aus den Verfahrensschritten S102 bis S106. Diese Schleife wird erst dann im Verfahrensschritt S106 verlassen, wenn die Bedienperson einen in der Vorschlagzeile 60 dargestellten Vorschlag durch zweimaliges Drücken der Bestätigungstaste 52 annimmt. In diesem Fall folgt nach dem Verfahrensschritt S106 unmittelbar ein Verfahrensschritt S108.

Im Verfahrensschritt S108 beginnt die Eingabe des Namens der Zielstraße. Die Bedienperson wählt mit Hilfe der Eingabetasten 34 bis 40 ein Zeichen aus den Zeilen 46 bis 50 aus. In einem folgenden Verfahrensschritt S110 ermittelt die Steuereinheit des Navigationssystems 12 die Straßen, die mit diesem Zeichen beginnen und wählt von diesen Straßen die längste Straße aus. Der Name dieser Straße wird in der Vorschlagzeile 60 dargestellt.

In einem Verfahrensschritt S112 wird anschließend geprüft, ob der Vorschlag für einen Straßennamen durch die Bedienperson angenommen worden ist. Ist dies nicht der Fall, so wird das Verfahren im Verfahrensschritt S108 fortgesetzt. Die Bedienperson gibt mit Hilfe der Eingabetasten 34 bis 40 weitere Buchstaben des Namens der Zielstraße ein. Die Steuereinheit des Navigationssystems 12 schlägt weitere Namen vor, bis die Schleife aus den Verfahrensschritten S108 bis S112 im Verfahrensschritt S112 durch die Anname eines Vorschlages verlassen wird. Wird ein Vorschlag angenommen, so folgt unmittelbar nach dem Verfahrensschritt S112 ein Verfahrensschritt S114.

Im Verfahrensschritt S114 gibt die Bedienperson mit Hilfe der Eingabetasten 34 bis 40 die Hausnummer ein, zu der sie mit Hilfe des Navigationssystems 12 gelangen möchte. Anschließend wird das Verfahren in einem Verfahrensschritt S116 beendet. Das Navigationssystem 12 kennt nun das genaue Fahrziel und leitet die Bedienperson durch automatisch ausgegebene Richtungs- und Entfernungsangaben zu diesem Ziel hin.

## Patentansprüche

1. Vorrichtung (12) zum Eingeben von Namen in ein Navigationssystem (12), mit einer Speichereinheit zum Speichern von Namen mindestens einer Kategorie von Ortsangaben, mit einer Eingabeeinheit (32) zum Auswählen eines Namens, mit einer Anzeigeeinheit (44) zur Unterstützung der Eingabe, und mit einer Steuereinheit, die abhängig von einem vorgegebenen Sortierkriterium für die gespeicherten Namen einer Kategorie und abhängig von früheren Eingaben zur Auswahl des einzugebenden Namens auf der Anzeigeeinheit (44) die Darstellung eines auswählbaren Namens (60) als Vorschlag veranlasst, wobei in der Steuereinheit die Auswahlwahrscheinlichkeit der Namen als Sortierkriterium dient, **dadurch gekennzeichnet, dass** als Maß für die Auswahlwahrscheinlichkeit mindestens eine statistisch erhobene oder messtechnisch erfasste Angabe über die örtlichen Gegebenheiten des mit dem Namen bezeichneten Gebietes herangezogen wird und dass die Eingabeeinheit (32) mindestens ein Eingabeelement (34 bis 40) enthält, das zum Auswählen eines einzugebenden Zeichens oder eines Namens aus einer Namensliste betätigt wird, und dass die Eingabeeinheit mindestens ein anderes Eingabeelement (52) enthält, mit dem die Auswahl eines Zeichens oder eines Namens betätigt wird.

2. Vorrichtung (12) nach Anspruch 1, **dadurch gekennzeichnet, dass** als Maß für die Auswahlwahrscheinlichkeit eines Ländernamens die Einwohnerzahl des durch den Ländernamen bezeichneten Landes herangezogen wird.

3. Vorrichtung (12) nach Anspruch 1 oder 2, **dadurch gekennzeichnet, dass** als Maß für die Auswahlwahrscheinlichkeit eines Stadt- bzw. Ortsnamens die Einwohnerzahl der durch den Namen bezeichneten Stadt bzw. des durch den Namen bezeichneten Ortes (S104) herangezogen wird.

4. Vorrichtung (12) nach einem der vorhergehenden Ansprüche, **dadurch gekennzeichnet, dass** als Maß für die Auswahlwahrscheinlichkeit eines Straßennamens die Zahl der Anwohner und/oder die Straßenlänge und/oder die Anzahl der Hausnummern der durch den Straßennamen bezeichneten Strasse herangezogen wird (S110).

5. Vorrichtung (12) nach einem der vorhergehenden Ansprüche, **dadurch gekennzeichnet, dass** als Maß für die Auswahlwahrscheinlichkeit die Anzahl und/oder Größe von Hotels und/oder die Anzahl von Büros und/oder Bahnhöfen und/oder Flughäfen in der Nähe und/oder innerhalb des durch den Namen bezeichneten Gebietes herangezogen werden.

6. Vorrichtung (12) nach einem der vorhergehenden Ansprüche, **dadurch gekennzeichnet, dass** die Eingabeeinheit (32) Eingabeelemente enthält, die, zur Eingabe eines dem Eingabeelement zugeordneten Zeichens mehrfach hintereinander ohne Betätigung anderer Eingabeelemente betätigt werden.

7. Vorrichtung (12) nach einem der vorhergehenden Ansprüche, **dadurch gekennzeichnet, dass** das Sortierkriterium auswählbar ist, wobei vorzugsweise gemäß einem anderen Sortierkriterium die Namen alphabetisch sortiert werden.

8. Navigationssystem (12), insbesondere für Kraftfahrzeuge, **gekennzeichnet durch** eine Vorrichtung (32,44) zum Eingeben von Namen für Ortsangaben gemäß einem der vorhergehenden Ansprüche.

9. Verfahren zum Eingeben von Namen in ein Navigationssystem (12) mit einer Eingabeeinheit (32), wobei eine Speichereinheit Namen mindestens einer Kategorie von Ortsangaben speichert, wobei über eine Eingabeeinheit (32) ein Name ausgewählt wird, wobei eine Anzeigeeinheit (44) die Eingabe unterstützt, und wobei eine Steuereinheit abhängig von einem vorgegebenen Sortierkriterium für die gespeicherten Namen einer Kategorie und abhängig von früheren Eingaben zur Auswahl des einzugebenden Namens auf der Anzeigeeinheit (44) die Darstellung eines auswählbaren Namens (60) als Vorschlag veranlasst, wobei in der Steuereinheit die Auswahlwahrscheinlichkeit der Namen als Sortierkriterium dient, **dadurch gekennzeichnet, dass** als Maß für die Auswahlwahrscheinlichkeit mindestens eine statistisch erhobene oder messtechnisch erfasste Angabe über die örtlichen Gegebenheiten des mit dem Namen bezeichneten Gebietes herangezogen wird und dass mindestens ein Eingabeelement (34 bis 40) der Eingabeeinheit (32) zum Auswählen eines einzugebenden Zeichens oder eines Namens aus einer Namensliste betätigt wird, und dass über mindestens ein anderes Eingabeelement (52) der Eingabeeinheit die Auswahl eines Zeichens oder eines Namens bestätigt wird.

## Claims

1. Apparatus (12) for inputting names into a navigation system (12), having a memory unit for storing names in at least one category of locations, having an input unit (32) for selecting a name, having a display unit (44) for assisting the input, and having a control unit which takes a prescribed sorting criterion for the stored names in a category and takes earlier inputs for selecting the name to be input on the display unit (44) as a basis for prompting the display of a selectable name (60) as a proposal, with the likelihood of selection of the names being used as a sorting criterion in the control unit, **characterized in that** the measure used for the likelihood of selection is at least one statistically collected or metrologically recorded statement about the local circumstances of the area denoted by the name, and **in that** the input unit (32) contains at least one input element (34 to 40) which is operated in order to select a character to be input or a name from a list of names, and **in that** the input unit contains at least one other input element (52) which is used to confirm the selection of a character or of a name.

2. Apparatus (12) according to Claim 1, **characterized in that** the measure used for the likelihood of selection of a country name is the number of inhabitants in the country denoted by the country name.

3. Apparatus (12) according to Claim 1 or 2, **characterized in that** the measure used for the likelihood of selection of a town name or place name is the number of inhabitants in the town denoted by the name or in the place denoted by the name (S104).

4. Apparatus (12) according to one of the preceding claims, **characterized in that** the measure used for the likelihood of selection of a road name is the number of inhabitants and/or the road length and/or the number of house numbers in the road denoted by the road name (S110).

5. Apparatus (12) according to one of the preceding claims, **characterized in that** the measure used for the likelihood of selection is the number and/or size of hotels and/or the number of offices and/or stations and/or airports in proximity to and/or within the area denoted by the name.

6. Apparatus (12) according to one of the preceding claims, **characterized in that** the input unit (32) contains input elements which are operated a plurality of times in succession without operating other input elements in order to input a character associated with the input element.

7. Apparatus (12) according to one of the preceding claims, **characterized in that** the sorting criterion is selectable, the names being sorted alphabetically, preferably on the basis of another sorting criterion.

8. Navigation system (12), particularly for motor vehicles, **characterized by** an apparatus (32, 44) for inputting names for locations according to one of the preceding claims.

9. Method for inputting names into a navigation system (12) having an input unit (32), where a memory unit stores names in at least one category of locations, wherein an input unit (32) is used to select a name, wherein a display unit (44) assists the input, and wherein a control unit takes a prescribed sorting criterion for the stored names in a category and takes earlier inputs for selecting the name to be input on the display unit (44) as a basis for prompting the display of a selectable name (60) as a proposal, the likelihood of selection of the names being used as a sorting criterion in the control unit, **characterized in that** the measure used for the likelihood of selection is at least one statistically collected or metrologically recorded statement about the local circumstances of the area denoted by the name, and **in that** at least one input element (34 to 40) of the input unit (32) is operated in order to select a character to be input or a name from a list of names, and **in that** at least one other input element (52) of the input unit is used to confirm the selection of a character or of a name.

## Revendications

1. Dispositif (12) pour saisir des noms dans un système de navigation (12), comprenant une unité de mémorisation pour mémoriser les noms d'au moins une catégorie d'indications de lieu, comprenant une unité de saisie (32) pour sélectionner un nom, comprenant une unité d'affichage (44) pour assister la saisie et comprenant une unité de commande qui initie la représentation sous la forme d'une suggestion d'un nom (60) pouvant être sélectionné en fonction d'un critère de tri préalablement indiqué pour les noms mémorisés d'une catégorie et en fonction des saisies précédentes destinées à sélectionner le nom à saisir sur l'unité d'affichage (44), la probabilité de sélection du nom servant de critère de tri dans l'unité de commande, **caractérisé en ce que** l'indice utilisé pour la probabilité de sélection est au moins une indication relevée statistiquement ou acquise par métrologie sur les conditions locales de la région désignée par le nom et que l'unité de saisie (32) contient au moins un élément de saisie (34 à 40) qui est actionné pour sélectionner un caractère à saisir ou un nom dans une liste de noms, et que l'unité de saisie contient au moins un autre élément de saisie (52) avec lequel la sélection d'un caractère ou d'un nom est confirmée.

2. Dispositif (12) selon la revendication 1, **caractérisé en ce que** l'indice utilisé pour la probabilité de sélection d'un nom de pays est le nombre d'habitants du pays désigné par le nom de pays.

3. Dispositif (12) selon la revendication 1 ou 2, **caractérisé en ce que** l'indice utilisé pour la probabilité de sélection d'un nom de ville ou de lieu est le nombre d'habitants de la ville désignée par le nom ou du lieu (S104) désigné par le nom.

4. Dispositif (12) selon l'une des revendications précédentes, **caractérisé en ce que** l'indice utilisé pour la probabilité de sélection d'un nom de rue est le nombre de riverains et/ou la longueur de la rue et/ou le nombre de numéros de maison de la rue désignée par le nom de la rue (S110).

5. Dispositif (12) selon l'une des revendications précédentes, **caractérisé en ce que** l'indice utilisé pour la probabilité de sélection est le nombre et/ou la taille des hôtels et/ou le nombre de bureaux et/ou de gares ferroviaires et/ou d'aéroports à proximité et/ou à l'intérieur de la région désignée par le nom.

6. Dispositif (12) selon l'une des revendications précédentes, **caractérisé en ce que** l'unité de saisie (32) contient des éléments de saisie qui, pour saisir un caractère associé à l'élément de saisie, sont actionnés plusieurs fois successivement sans actionner d'autres éléments de saisie.

7. Dispositif (12) selon l'une des revendications précédentes, **caractérisé en ce qu'**il est possible de sélectionner un critère de tri, les noms étant de préférence triés alphabétiquement selon un autre critère de tri.

8. Système de navigation (12), notamment pour véhicules automobiles, **caractérisé par** un dispositif (32, 44) de saisie de noms d'indication de lieux selon l'une des revendications précédentes.

9. Procédé pour saisir des noms dans un système de navigation (12) comprenant une unité de saisie (32), une unité de mémorisation mémorisant les noms d'au moins une catégorie d'indications de lieu, un nom étant sélectionné par le biais d'une unité de saisie (32), une unité d'affichage (44) assistant la saisie et une unité de commande initiant la représentation sous la forme d'une suggestion d'un nom (60) pouvant être sélectionné en fonction d'un critère de tri préalablement indiqué pour les noms mémorisés d'une catégorie et en fonction des saisies précédentes destinées à sélectionner le nom à saisir sur l'unité d'affichage (44), la probabilité de sélection du nom servant de critère de tri dans l'unité de commande, **caractérisé en ce que** l'indice utilisé pour la probabilité de sélection est au moins une indication relevée statistiquement ou acquise par métrologie sur les conditions locales de la région désignée par le nom et qu'au moins un élément de saisie (34 à 40) de l'unité de saisie (32) est actionné pour sélectionner un caractère à saisir ou un nom dans une liste de noms, et que la sélection d'un caractère ou d'un nom est confirmée par le biais d'au moins un autre élément de saisie (52) de l'unité de saisie.
